(19) Europäisches Patentamt

European Patent Office

Office européen des brevets

(11) **EP 1 085 037 A1**

(12) **EUROPEAN PATENT APPLICATION**
published in accordance with Art. 158(3) EPC

(43) Date of publication:
21.03.2001 Bulletin 2001/12

(51) Int. Cl.[7]: **C08J 5/18**, C08L 23/08

(21) Application number: 99901203.2

(86) International application number:
**PCT/JP99/00413**

(22) Date of filing: 01.02.1999

(87) International publication number:
**WO 00/46279 (10.08.2000 Gazette 2000/32)**

(84) Designated Contracting States:
**DE ES FR GB IT NL**

(71) Applicant:
**Mitsui Chemicals, Inc.
Tokyo 100-6070 (JP)**

(72) Inventors:
• **NAGANO, Shinichi
Ichihara-shi Chiba 299-0108 (JP)**

• **AOKI, Tadashi
Ichihara-shi Chiba 299-0108 (JP)**

(74) Representative:
**Cresswell, Thomas Anthony
J.A. KEMP & CO.
14 South Square
Gray's Inn
London WC1R 5LX (GB)**

(54) **WATER BARRIER SHEET**

(57) The water shield sheet according to the present invention comprises an ethylene/α-olefin copolymer (A) which is a copolymer of ethylene and an α-olefin of 3 to 20 carbon atoms and which has an MFR in the range of 0.05 to 10 g/10 min, a density (d) in the range of 880 to 935 $kg/cm^3$, and a relation between a temperature (Tm (°C )) at the maximum peak position in an endothermic curve, as measured by DSC, and a density (d ($kg/cm^3$)), of $Tm < 0.4 \times d - 244$ , and a quantity fraction (W) of n-decane-soluble component at room temperature of not higher than 3.0 % by weight.

The water shield sheet has excellent mechanical strength such as tensile strength and strength and elongation at tear strength and elongation at penetration, as well as excellent flexibility and fusion properties.

**EP 1 085 037 A1**

Printed by Xerox (UK) Business Services
2.16.7 (HRS)/3.6

**Description**

FIELD OF THE INVENTION

The present invention relates to a water shield sheet, and more specifically, to a water shield sheet which has excellent tensile and tear properties, flexibility and fusion properties and which is used in, for example, waste disposal sites, pools, reservoirs and tunnels.

BACKGROUND OF THE INVENTION

Sheets of ethylene/vinyl acetate copolymer resins, polyvinyl chloride resins and synthetic rubbers have conventionally been used as a water shield sheet in waste disposal sites and the like. Because of their insufficient tensile strength, tear strength and penetration strength, however, these sheets have recently become replaced with high-density polyethylene resin sheets in part.

However, the high-density polyethylene resin sheets have insufficient flexibility and fusion properties, and thus are lack of applicability as a water shield sheet. Further, these sheets are also insufficient in elongation at break, so that it is desired to improve their properties for applying them to irregular or bumpy sites.

Accordingly, there is a need to develop a water shield sheet which has improved mechanical properties such as tensile strength, tear strength, elongation at break, penetration strength and elongation at penetration, as well as improved flexibility and fusion properties.

The present invention seeks to solve the above-mentioned problems in the prior art. More specifically, it is an object of the present invention to provide a water shield sheet which has excellent mechanical strength characteristics such as tensile strength, tear strength, elongation at break, penetration strength and elongation at penetration, and also has excellent flexibility and fusion properties as compared to prior art water shield sheets.

SUMMARY OF THE INVENTION

The water shield sheet according to the present invention is characterized in that said sheet comprises an ethylene/$\alpha$-olefin copolymer (A) which has the following properties:

(i) a copolymer of ethylene and an $\alpha$-olefin of 3 to 20 carbon atoms;
(ii) a melt flow rate (MFR: ASTM D 1238, 190 °C, load of 2.16 kg) being in the range of 0.05 to 10 g/10 min;
(iii) a density (d) being in the range of 880 to 935 kg/m$^3$;
(iv) a temperature (melting point: Tm (°C)) at the maximum peak position in an endothermic curve, as measured in a differential scanning calorimeter (DSC), and the density (d (kg/m$^3$)) satisfying the following relation:

$$Tm < 0.4 \times d - 244; \text{ and}$$

(v) a quantity fraction (W) of n-decane-soluble component at room temperature being not higher than 3.0 % by weight.

The above-mentioned ethylene/$\alpha$-olefin copolymer (A) is an ethylene/$\alpha$-olefin copolymer prepared using a metallocene catalyst.

Among the ethylene/$\alpha$-olefin copolymers (A), in the case, in particular, where improved molding processability is required, suitable is an ethylene/$\alpha$-olefin copolymer (A1) which is prepared by copolymerizing ethylene and an $\alpha$-olefin of 6 to 20 carbon atoms in the presence of an olefin polymerization catalyst comprising:

(a)' a transition metal compound of Group IV of the periodic table, which contains a ligand having a cyclopentadienyl skeleton;
(b) an organoaluminum-oxy compound or (c) an ionizing ionic compound; and
(d) a carrier, and which has the following properties:

(i) a density being in the range of 880 to 935 kg/cm$^3$;
(ii) a melt flow rate (NFR (g/10 min)) at 190 °C and a load of 2.16 kg being in the range of 0.05 to 2.0 g/10 min;
(iii) a quantity fraction (W) of n-decane-soluble component at room temperature and a density (d (kg/m$^3$)) satisfying the following relation:

$$W < 80 \exp (-100 (d/1000 - 0.88)) + 0.1;$$

(iv) a flow index (FI (l/sec)) defined as a shear rate when shear stress of the molten polymer at 190 °C reaches $2.4 \times 10^6$ dyne/cm$^2$ and a melt flow rate (MFR (g/10 min)) satisfying the following relation:

$$FI > 75 \times MFR; \text{ and}$$

(v) a melt tension (MT (g)) at 190 °C and a melt flow rate (MFR (g/10 min)) satisfying the following relation:

$$MT > 2.2 \times MFR^{-0.84},$$

$$\text{preferably } 5.5 \times MFR^{-0.65} > MT > 2.2 \times MFR^{-0.84}.$$

It is preferable that the above-mentioned ethylene/α-olefin copolymer (A1) satisfy the following relation:

$$B1 \geq B2$$

where B1 is an average of the number of branches in a higher molecular weight side of the copolymer and B2 is an average of the number of branches in a lower molecular weight side of the copolymer, both as measured by GPC-IR.

The ethylene/α-olefin copolymer (A) may contain a carbon black (B) in an amount of 0.3 to 5.0 parts by weight based on 100 parts by weight of the copolymer (A).

It is desirable that the water shield sheet according to the present invention have a thickness of 0.4 to 4.0 mm.

It is further preferable for the water shield sheets according to the present invention to have the following properties:

(1) elongation at tear in a thickness of 1.5 mm being not less than 80 %;
(2) penetration strength in a thickness of 1.5 mm being not less than 5 mm; and
(3) peel strength of a fusion portion, when heat sealed using a heat-sealer available in the site under the conditions of a set temperature of 500 °C and a sealing rate of 5 m/min, being not less than 10 kg/20 mm.

BEST MODE FOR PRACTICING THE INVENTION

The water shield sheet according to the present invention will be described in detail below.

The water shield sheet according to the invention comprises an ethylene/α-olefin copolymer (A). The ethylene/α-olefin copolymer (A) may contain a carbon black (B).

Ethylene/α-olefin copolymer (A)

The ethylene/α-olefin copolymer (A) used as a raw material for the water shield sheet according to the present invention is a copolymer of ethylene and an α-olefin of 3 to 20 carbon atoms.

Examples of the α-olefins of 3 to 20 carbon atoms includes propylene, 1-butene, 1-pentene, 4-methyle-1-pentene, 1-hexene, 1-octene, 1-decene and 1-dodecene. Of these, preferred are α-olefins of 3 to 10 carbon atoms, particularly of 4 to 8 carbon atoms.

These α-olefins may be used alone or in combination of two or more.

In the ethylene/α-olefin copolymer (A), it is desirable that the molar ratio of constituent units derived from an α-olefin to constituent units derived from ethylene (α-olefin/ethylene) be 0.005 to 0.15, preferably 0.01 to 0.10.

It is preferable that the ethylene/α-olefin copolymer (A) have a melt flow rate (MFR: ASTM D 1238, 190 °C, load of 2.16 kg) in the range of 0.05 to 10 g/10 min, particularly 0.5 to 7.0 g/10 min. The ethylene/α-olefin copolymer (A) having such a range of melt flow rate can easily be extrusion molded to produce a water shield sheet.

It is also desirable that the ethylene/α-olefin copolymer (A) have a density (d) in the range of 880 to 935 kg/cm$^3$, preferably 900 to 930 kg/cm$^3$, more preferably 905 to 926 kg/cm$^3$. The ethylene/α-olefin copolymer (A) having such a range of density can provide a water shield sheet having not only excellent flexibility but also high tensile strength.

The density is measured in a gradient density tube, in which strands obtained in the measurement of melt flow rate (MFR) of the copolymer at 190 °C under a load of 2.16 kg are heat treated at 120 °C for 1 hour, slowly cooled to room temperature over a period of 1 hour, and then the density is determined.

In the ethylene/α-olefin copolymer (A), it is further desirable that a temperature (Tm (°C)) at maximum peak position in an endothermic curve as measured by a differential scanning calorimeter (DSC) and a density (d (g/cm$^3$)) satisfy the following relation:

$$Tm < 0.4 \times d - 244,$$

$$\text{Preferably } Tm < 0.45 \times d - 291.$$

The temperature (Tm (°C)) at maximum peak position in an endothermic curve as measured by a differential scanning calorimeter (DSC) is found out from an endothermic curve which is obtained by heating a sample of about 5 mg up to 200 °C at a rate of 10 °C/min in an aluminum pan, maintaining the sample at 200 °C for 5 minutes, cooling it to room temperature at a rate of 10 °C/min and then heating it again at a rate of 10 °C/min. The measurement is carried out by the use of an apparatus of DSC-7 model manufactured by Perkin Elmer Co.

It is desirable that the ethylene/$\alpha$-olefin copolymer (A) for use in the present invention has a quantity fraction (W (% by weight)) of n-decane-soluble component at room temperature of not more than 3.0 % by weight, preferably not more than 2.0 % by weight. When the quantity fraction (W (% by weight)) of n-decane-soluble component is more than 3.0 % by weight, the sheet exhibits remarkable tackiness on its surface and thus is apt to blocking, resulting in poor applicability in the site.

The quantity fraction (W (% by weight)) of n-decane-soluble component is measured in the following manner. About 3 mg of a sample (ethylene/$\alpha$-olefin copolymer) is added to 450 ml of n-decane, dissolved therein at 145 °C and the solution is cooled to room temperature (23 °C). Then, the solution is filtered to remove an n-decane-insoluble portion and to recover an n-decane-soluble portion from the filtrate. The quantity fraction (W (% by weight)) of n-decane-soluble component is found by dividing the weight of n-decane-soluble portion by the initial weight of sample and multiplying 100.

Further, it is desirable that in the ethylene/$\alpha$-olefin copolymer (A) for use in the invention, a flow index (FI (l/sec)) defined as a shear rate when shear stress of the molten polymer at 190 °C reaches $2.4 \times 10^6$ dyne/cm$^2$ and a melt flow rate (MFR (g/10 min)) satisfying the following relation:

$FI < 150 \times MFR$, preferably $FI < 100 \times MFR$. When the ethylene/$\alpha$-olefin copolymer (A) in which the melt index satisfying the above relation is used, a sheet having high tensile strength can be obtained.

The melt index (MI (l/sec)) is determined in such a manner that a sample is extruded at 190 °C through a capillary while varying a shear rate, and the shear rate corresponding to given shear stress, i.e., the shear rate at which the shear stress reaches $2.4 \times 10^6$ dyne/cm$^2$ at 190 °C, is measured. That is, the measurement is carried out using a flow characteristics tester of capillary type manufactured by Toyoseiki Seisakusho K.K. at a resin temperature of 190 °C and shear stress in the range of about $5 \times 10^4$ to $3 \times 10^6$ dyne/cm$^2$. Depending on the MFR (g/10 min) of a sample to be measured, the diameter of nozzle is changed as follows:

when $10 \geq MFR > 3$, nozzle diameter is 1.0 mm;
when $3 \geq MFR > 0.8$, nozzle diameter is 2.0 mm; and
when $0.8 \geq MFR \geq 0.1$, nozzle diameter is 3.0 mm.

The ethylene/$\alpha$-olefin copolymer (A) having the above-mentioned properties can be prepared using a metallocene catalyst comprising a metallocene compound of a transition metal, an organoaluminum-oxy compound and optionally an organoaluminum compound and/or an organoboron compound.

By way of example of processes for preparing copolymers, ethylene and an $\alpha$-olefin of 3 to 20 carbon atoms can be copolymerized in the presence of bis(n-butylcyclopentadienyl)zirconium dichloride and an aluminoxane to obtain an ethylene/$\alpha$-olefin copolymer (A).

The metallocene catalyst is generally formed from a metallocene catalyst component (a) comprising a transition metal compound of Group IVB of the periodic table, which contains at least one ligand having a cyclopentadienyl skeleton, and an organoaluminum-oxy compound catalyst component (b), and optionally an ionizing ionic compound catalyst component (c), a powdery carrier (d), and an organoaluminum compound catalyst component (e).

The metallocene catalyst component (a) preferably used in the present invention is a transition metal compound of Group IVB of the periodic table, which contains at least one ligand having a cyclopentadienyl skeleton. Examples of the transition metal compounds include those compounds represented by the following general formula [I]:

$$ML^1{}_x \qquad\qquad\qquad [I]$$

where

x is a valence of a transition metal atom M,
M is a transition metal atom of Group IVB of the periodic table, preferably zirconium, and
$L^1$ is a ligand coordinating to the transition metal atom M, and at least one ligand $L^1$ has a cyclopentadienyl skeleton.

When the compound of the formula [I] contains two or more groups having a cyclopentadienyl skeleton, two of these groups having a cyclopentadienyl skeleton may be bonded to each other via a bridging group such as a (substituted) alkylene group or a (substituted) silylene group.

A ligand or ligands $L^1$ other than that having a cyclopentadienyl skeleton may, for example, be an alkyl group, a cycloalkyl group, an aryl group, an aralkyl group, an alkoxy group, an aryloxy group, a trialkylsilyl group, a hydrocarbon group containing a sulfonato group, a halogen atom or a hydrogen atom.

Examples of these metallocene catalyst components (a) include bis(n-butylcyclopentadienyl)zirconium dichloride.

As the organoaluminum-oxy compound catalyst components (b), conventionally known aluminoxanes may preferably be used.

Examples of the ionizing ionic compound catalyst components (c) include Lewis acids; ionic compounds such as triphenylcarbeniumtetrakis(pentafluorophenyl)borate; and carborane compounds such as dodecaborane.

The powdery carriers (d) may be conventionally known inorganic or organic compounds which are solids in the form of granules or powder having a particle size of preferably 20 to 200 μm.

As the organoaluminum compound catalyst components (e), usable are, for example, trialkylaluminums, alkenylaluminums, dialkylaluminum halides and alkylaluminum sesquihalides.

The ethylene/α-olefin copolymer (A) for use in the present invention can be prepared by copolymerizing ethylene and an α-olefin in the presence of a catalyst comprising the above-mentioned metallocene catalyst component (a) under various conditions, for example, in gas phase or liquid phase, such as slurry or solution polymerization.

In the slurry or solution polymerization, an inert hydrocarbon may be used as a solvent and the α-olefin, per se, may also be a solvent.

In the preparation of the ethylene/α-olefin copolymer (A) according to the present invention, many polymerization processes may be employed, for example, (1) multi-step polymerization, (2) multi-step polymerization in the liquid and gas phases, and (3) prepolymerization in the liquid phase followed by polymerization in the gas phase.

The ethylene/α-olefin copolymer (A) obtained using a metallocene catalyst has a narrow molecular distribution (Mw/Mn = 1.5 to 3.5), so that the copolymer (A) has an advantage that the resulting sheets hardly exhibit the tendency of blocking to each other.

Of the above-mentioned ethylene/α-olefin copolymers (A), particularly preferred is an ethylene/α-olefin copolymer (A1) as described below, in the case where improved molding processability is required.

The ethylene/α-olefin copolymer (A1) comprises ethylene and an α-olefin of 6 to 20 carbon atoms.

Examples of the α-olefins of 6 to 20 carbon atoms include 1-butene, 1-pentene, 1-hexene, 4-methyle-1-pentene, 1-octene, 1-decene and 1-dodecene.

The ethylene/α-olefin copolymer (A1) generally has an ethylene content of 94 to 99 % by mol, preferably 96 to 98 % by mol, and an α-olefin comonomer content of 1 to 6 % by mol, preferably 2 to 4 % by mol.

It is desirable that the ethylene/α-olefin copolymer (A1) have a density (d) (ASTM D 1505) in the range of 880 to 935 $kg/cm^3$, preferably 900 to 930 $kg/cm^3$, more preferably 905 to 926 $kg/cm^3$.

It is also desirable that the ethylene/α-olefin copolymer (A1) have a melt flow rate (MFR: ASTM D 1238) at 190 °C and a load of 2.16 kg in the range of 0.05 to 2.0 g/10 min, preferably 0.1 to 2.0 g/10 min. In the ethylene/α-olefin copolymer (A1), the quantity fraction (W (% by weight)) of n-decane-soluble component and the density (d ($kg/cm^3$)) satisfy the following relation:

$$W < 80 \times \exp(-100(d/1000-0.88)) + 0.1,$$

$$\text{preferably } W < 60 \times \exp(-100(d/1000-0.88)) + 0.1.$$

In the ethylene/α-olefin copolymer (A1), the flow index (FI(l/sec)) defined as a shear rate when shear stress at 190 °C reaches $2.4 \times 10^6$ $dyne/cm^2$ and the melt flow rate (MFR (g/10 min)) satisfy the following relation:

$$FI > 75 \times MFR,$$

$$\text{preferably } FI > 80 \times MFR.$$

In the linear ethylene/α-olefin copolymer (A1), the melt tension (MT) at 190 °C and the melt flow rate (MFR (g/10 min)) satisfy the following relation:

$$MT > 2.2 \times MFR^{-0.84},$$

$$\text{preferably } 5.5 \times MFR^{-0.65} > MT > 2.2 \times MFR^{-0.84},$$

more preferably $5.5 \times MFR^{-0.65} > MT > 2.5 \times MFR^{-0.84}$.

The ethylene/α-olefin copolymer (A1) further satisfies the following relation:

$$B1 \geq B2$$

where B1 is an average of the number of branches in a higher molecular weight side of the copolymer and B2 is an average of the number of branches in a lower molecular weight side of the copolymer, both as measured by GPC-IR.

The term "an average of the number of branches in a higher molecular weight side (B1), as measured by GPC-IR" means an average of the number of branches which is determined for a higher molecular weight side of 15 to 85 % of a cumulative weight quantity fraction of total amount of eluted polymer obtained by molecular weight fractionation by GPC (i.e., eluted amount of polymer components, excluding 15 % of low molecular weight polymer region and 15 % of high molecular weight polymer region, respectively). On the other hand, an average of the number of branches in a lower molecular weight side (B2) is an average of the number of branches which is determined for a lower molecular weight side, that is a half in the lower molecular weight side, of the above-defined eluted amount of polymer components.

The measuring conditions of the above B1 and B2 are as follows:

Measuring apparatus: PERKIN ELMER 1760X
Column: TOSOH TSKgel GMMH-HT

$$(7.5 \text{ mm I.D.} \times 600 \text{ mm}) \times 1$$

Eluent: o-dichlorobenzene (ODCB) containing 0.05 % of MP-J [produced by Wako Junyaku Co., extra pure grade]
Column temperature: 140
Sample concentration: 0.1 % (weight/volume)
Injection volume: 100 μl
Detector: MCT
Resolution: 8 cm$^{-1}$

The ethylene/α-olefin copolymer (A1) in which the B1 and B2 satisfy the above-mentioned relation has not only a narrow molecular distribution but also a low content of low molecular weight components, resulting in providing copolymer (A1) of low tackiness.

Thus, the ethylene/α-olefin copolymer (A1) having such properties can suitably be used in production of a water shield sheet.

Such a ethylene/α-olefin copolymer (A1) can be prepared by copolymerizing ethylene and an α-olefin of 6 to 20 carbon atoms in the presence of an olefin polymerization catalyst comprising:

(a)' a transition metal compound of Group IV of the periodic table, which contains a ligand having a cyclopentadienyl skeleton;
(b) an organoaluminum-oxy compound or (c) an ionizing ionic compound; and
(d) a carrier, and optionally
(e) an organoaluminum compound, so as to obtain a copolymer having a density of 880 to 935 kg/cm$^3$.

Now, the above-mentioned olefin polymerization catalyst and components thereof will be described below.

(a)' Transition metal compound

The transition metal compound (a)' of Group IV of the periodic table, which contains a ligand having a cyclopentadienyl skeleton (sometimes referred to as the component (a)', hereinafter) is specifically a transition metal compound represented by the following formula [II]:

$$ML^2_x \qquad\qquad [II]$$

where

M is a transition metal atom of Group IV of the periodic table,
$L^2$ is a ligand coordinating to the transition metal atom M, wherein at least two ligands $L^2$ are each a substituted cyclopentadienyl group having two or more substituents selected from methyl group and ethyl group, and a ligand or ligands $L^2$ other than the substituted cyclopentadienyl group is a hydrocarbon group of 1 to 12 carbon atoms, an alkoxy group, an aryloxy group, a halogen atom, a trialkylsilyl group or a hydrogen atom, and

x is a valence of a transition metal atom M.

Each of the ligands may be the same or different. It is preferable that the substituted cyclopentadienyl groups be those having 2 to 5, particularly 2 or 3 substituents. More preferably, they are disubstituted cyclopentadienyl groups, particularly preferably 1,3-disubstituted cyclopentadienyl groups. Each of the substituents may be the same or different.

In the general formula [II] above, M is a transition metal atom selected from those of Group IV of the periodic table, for example zirconium, titanium or hafnium, and preferred is zirconium.

Examples of transition metal compound represented by the general formula [II] include:

bis(cyclopentadienyl)zirconium dichloride,
bis(methylcyclopentadienyl)zirconium dichloride,
bis(ethylcyclopentadienyl)zirconium dichloride,
bis(n-propylcyclopentadienyl)zirconium dichloride,
bis(n-butylcyclopentadienyl)zirconium dichloride,
bis(n-hexylcyclopentadienyl)zirconium dichloride,
bis(methyl-n-propylcyclopentadienyl)zirconium dichloride,
bis(methyl-n-butylcyclopentadienyl)zirconium dichloride,
bis(dimethyl-n-butylcyclopentadienyl)zirconium dichloride,
bis(n-butylcyclopentadienyl)zirconium dibromide,
bis(n-butylcyclopentadienyl)zirconium methoxychloride,
bis(n-butylcyclopentadienyl)zirconium ethoxychloride,
bis(n-butylcyclopentadienyl)zirconium butoxychloride,
bis(n-butylcyclopentadienyl)zirconium ethoxide,
bis(n-butylcyclopentadienyl)zirconium methylchloride,
bis(n-butylcyclopentadienyl)zirconium dimethyl,
bis(n-butylcyclopentadienyl)zirconium benzylchloride,
bis(n-butylcyclopentadienyl)zirconium dibenzyl,
bis(n-butylcyclopentadienyl)zirconium phenylchloride,
bis(n-butylcyclopentadienyl)zirconium hydride chloride
bis(dimethylcyclopentadienyl)zirconium dichloride
bis(diethylcyclopentadienyl)zirconium dichloride
bis(methylethylcyclopentadienyl)zirconium dichloride
bis(dimethylethylcyclopentadienyl)zirconium dichloride
bis(dimethylcyclopentadienyl)zirconium dibromide
bis(dimethylcyclopentadienyl)zirconium methoxychloride,
bis(dimethylcyclopentadienyl)zirconium ethoxychloride,
bis(dimethylcyclopentadienyl)zirconium butoxychloride,
bis(dimethylcyclopentadienyl)zirconium diethoxide
bis(dimethylcyclopentadienyl)zirconium methylchloride,
bis(dimethylcyclopentadienyl)zirconium dimethyl
bis(dimethylcyclopentadienyl)zirconium benzylchloride
bis(dimethylcyclopentadienyl)zirconium dibenzyl
bis(dimethylcyclopentadienyl)zirconium phenylchloride, and
bis(dimethylcyclopentadienyl)zirconium hydride chloride.

In the above examples, disubstituted cyclopentadienyl rings include 1,2- and 1,3-disubstituted rings, and tri substituted cyclopentadienyl rings include 1,2,3- and 1,2,4-trisubstituted rings. Other transition meta compounds wherein the zirconium metal of the above-mentioned zirconium compounds is replaced by a titanium metal or a hafnium metal may also employable.

Of the compounds represented by the general formula [II], particularly preferred are:

bis(n-propylcyclopentadienyl)zirconium dichloride,
bis(n-butylcyclopentadienyl)zirconium dichloride,
bis(1-methyl-3-n-propylcyclopentadienyl)zirconium dichloride,
bis(1-methyl-3-n-butylcyclopentadienyl)zirconium dichloride,

bis(1,3-dimethylcyclopentadienyl)zirconium dichloride,

bis(1,3-diethylcyclopentadienyl)zirconium dichloride, and

bis(1-methyl-3-ethylcyclopentadienyl)zirconium dichloride.

The transition metal compound used in the present invention may be a mixture of two or more transition metal compounds represented by the general formula [II].

For example, there may be mentioned a combination of bis(1,3-n-buylmethylcyclopentadienyl)zirconium dichloride with bis(1,3-dimethylcyclopentadienyl)zirconium dichloride; a combination of bis(1,3-n-propylmethylcyclopentadienyl)zirconium dichloride with bis(1,3-dimethylcyclopentadienyl)zirconium dichloride; and a combination of bis(n-butylcyclopentadienyl)zirconium dichloride with bis(1,3-dimethylcyclopentadienyl)zirconium dichloride.

Further, the transition metal compound used in the present invention may also be a mixture of a transition metal compounds represented by the general formula [II] with a transition metal compounds represented by the following general formula [III]:

$$MKL^3{}_{x-2} \qquad\qquad [III]$$

where

M is a transition metal atom selected from those of Group IV of the periodic table,

K and $L^3$ are each a ligand coordinating to the transition metal atom, wherein the ligand K is a bidentated ligand formed from indenyl groups, substituted indenyl groups or partial hydrogenated groups thereof, which may be the same or different, by bonding to each other via a lower alkylene group, and the ligand $L^2$ is a hydrocarbon group of 1 to 12 carbon atoms, an alkoxy group, an aryloxy group, a halogen atom, a trialkylsilyl group or a hydrogen atom, and

x is a valence of a transition metal atom M.

Examples of the transition metal compounds represent by the general formula [III] include:

ethylenebis(indenyl)zirconium dichloride,

ethylenebis(4-methyl-1-indenyl)zirconium dichloride, and

ethylenebis(4,5,6,7-tetrahydro-1-indenyl)zirconium dichloride.

In the present invention, it is preferable that as the transition metal compound (a)', at least one selected from the transition metal compounds represented by the general formula [II] and at least one selected from the transition metal compounds represented by the general formula [III] are used in combination.

It is desirable that at least one transition metal compound (a-1) selected from the transition metal compounds represented by the general formula [II] and at least one transition metal compound (a-2) selected from transition metal compounds represented by the general formula [III] be used in a molar ratio (a-1/a-2) in the range of 99/1 to 50/50, preferably 97/3 to 70/30, more preferably 95/5 to 75/25, most preferably 90/10 to 80/20.

(b) Organoaluminum-oxy compound

Now, the organoaluminum-oxy compound (b) will be described.

The organoaluminum-oxy compound (b) for use in the present invention (sometimes referred to as the component (b), hereinafter) may be not only conventionally known benzene-soluble aluminoxanes, but also benzene-insoluble organoaluminum-oxy compounds, such as those described in JP-A-2-276807.

These aluminoxanes can be prepared, for example, by the following methods:

(1) A method wherein a compound containing absorbed water or a salt containing water of crystallization, for example magnesium chloride hydrate, cupper sulfate hydrate, aluminum sulfate hydrate, nickel sulfate hydrate or cerium (III) chloride hydrate, is suspended in a hydrocarbon solvent, and then an organoaluminum compound such as a trialkylaluminum is added to the suspension, to recover as a solution in the hydrocarbon.

(2) A method wherein an organoaluminum compound such as a trialkylaluminum in a solvent such as benzene, toluene, ethyl ether or tetrahydrofuran is brought into reaction directly with water, ice or steam, to recover as a solution in the hydrocarbon.

(3) A method wherein an organoaluminum compound such as a trialkylaluminum in a solvent such as decane, benzene or toluene is brought into reaction with an organotin compound such as dimethyltin oxide or dibutyltin oxide.

The aluminoxanes may contain other organometal compounds in a small quantity. The recovered aluminoxane solution may be distilled to remove the solvent or the unreacted organoaluminum compound, and the resulting product may be redissolved in a fresh solvent.

Examples of the organoaluminum compounds for use in preparation of aluminoxanes include:

trialkylaluminums, such as trimethylaluminum, triethylaluminum, tripropylaluminum, triisopropylaluminum, tri-n-butylaluminum, triisobutylaluminum, tri-sec-butylaluminum, tri-tert-butylaluminum, tripentylaluminum, trihexylaluminum, trioctylaluminum and tridecylaluminum;
tricycloalkylaluminums, such as tricyclohxylaluminum and tricyclooctylaluminum;
dialkylaluminum halides, such as dimethylaluminum chloride, diethylaluminum chloride, diethylaluminum bromide and diisopropylaluminum chloride;
dialkylaluminum hydrides, such as diethylaluminum hydride and diisobutylaluminum hydride;
dialkylaluminum alkoxides, such as dimethylaluminum methoxide and diethylaluminum ethoxide; and
dialkylaluminum aryloxides, such as diethylaluminum phenoxide.

Of these, particularly preferred are trialkylaluminums and trialkylaluminums.

Further, as the organoaluminum compound, isoprenylaluminums represented by the following formula:

$$(\text{i-}C_4H_9)_x \, Al_y \, (C_5H_{10})_z$$

wherein x, y and z are each a positive integer and $Z > 2x$, may also employable.

The above-mentioned organoaluminum compounds may be used singly or in combination.

Examples of the solvents for use in preparation of aluminoxanes include aromatic hydrocarbons, such as benzene, toluene, xylene, cumene and cymene; aliphatic hydrocarbons, such as pentane, hexane, heptane, octane, decane, dodecane, hexadecane and octadecane; alicyclic hydrocarbons, such as cyclopentane, cyclohexane, cyclooctane and methylcyclopentane; petroleum fractions, such as gasoline, kerosene and gas oil; and halogenated products of the above-mentioned aromatic hydrocarbons, aliphatic hydrocarbons and alicyclic hydrocarbons, in particular chlorinated and brominated products. In addition, ethers, such as ethyl ether and tetrahydrofuran may also be employable. Of these, particularly preferred are aromatic hydrocarbons.

In the above-mentioned benzene-insoluble organoaluminum compounds, Al components which dissolve in benzene at 60 °C are present in an amount, in terms of Al atom, of not more than 10 %, preferably not more than 5 %, particularly preferably not more than 2 %, and thus they are insoluble or hardly soluble in benzene.

The solubility of organoaluminum compound in benzene is determined in the following manner. An organoaluminum compound in an amount corresponding to 100 mg-atom of Al is suspended in 100 ml of benzene, the suspension is stirred at 60 °C for 6 hours, and then is filtered in hot state through a 5-G glass filter equipped with a jacket. A solid on the filter was washed four times with 50 ml of benzene at 60 °C. The solubility is determined by measuring the amount (x mmol) of Al atom present in the total filtrate (x %).

(c) Ionizing ionic compound

Usable as the ionizing ionic compounds (c) for use in the present invention are, for example, Lewis acids; ionic compounds such as

triphenylcarbeniumtetrakis(pentafluorophenyl)borate;
and carborane compounds such as dodecaborane.

(d) Carrier

The carriers (d) for use in the present invention are inorganic or organic compounds which are solids in the form of granules or powder having a particle size of 10 to 300 μm, preferably 20 to 200 μm. Preferred carries are inorganic porous oxide compounds, and example thereof include $SiO_2$, $Al_2O_3$, MgO, $ZrO_2$, $TiO_2$, $Cr_2O_3$, CaO, ZnO, BaO, $ThO_2$ and $V_2O_3$, or mixtures thereof, for example $SiO_2\text{-}MgO$, $SiO_2\text{-}Al_2O_3$, $SiO_2\text{-}TiO_2$, $SiO_2\text{-}V_2O_3$, $SiO_2\text{-}Cr_2O_3$ and $SiO_2\text{-}TiO_2\text{-}MgO$. Of these, it is preferable that the carriers comprise, as a major component, at least one component selected from the group consisting of $SiO_2$ and $Al_2O_3$.

The above-mentioned inorganic carriers may contain a small amount of carbonates, sulfates, nitrates or other oxide components, for example $Na_2CO_3$, $K_2CO_3$, $CaCO_3$, $MgCO_3$, $Na_2SO_4$, $Al_2(SO_4)_2$, $BaSO_4$, $KNO_3$, $Mg(NO_3)_2$, $Al(NO_3)_3$, $Na_2O$, $K_2O$ or $Li_2O$.

Although properties of these carriers (d) are different depending on sorts and preparation methods, it is desirable that the carriers for use in the present invention have a specific surface area of 50 to 1,000 $m^2$/g, preferably 100 to 700 $m^2$/g, and a pore volume of 0.3 to 2.5 $cm^2$/g. Optionally, the carriers may be calcined at 100 to 1,000 °C, preferably 150 to 700 °C before use.

Further, organic compounds in the form of granular or powdery solids having a particle size of 10 to 300 $\mu$m may also be used as carriers in the present invention. Examples of these organic compounds include (co)polymers comprising an $\alpha$-olefin of 2 to 14 carbon atoms, such as ethylene, propylene, 1-butene or 4-methyl-1-pentene, as a major component, and also polymers and copolymers comprising vinylcyclohexane or styrene.

(e) Organoaluminum compound

The olefin polymerization catalysts for use in preparation of the ethylene/$\alpha$-olefin copolymers according to the present invention are formed from the component (a)', the component (b) or (c), and the carrier (d), and optionally the organoaluminum compound (e), all described above.

As the organoaluminum compounds (e), which may optionally be used, there may be mentioned organoaluminum compounds represented by the general formula [IV]:

$$R^1_n Al X_{3-n} \qquad\qquad [IV]$$

where

R$^1$ is a hydrocarbon group of 1 to 12 carbon atoms,
X is a halogen atom or a hydrogen atom, and
n is 1 to 3.

In the general formula [IV] above, R$^1$ is a hydrocarbon group of 1 to 12 carbon atoms, such as an alkyl group, a cycloalkyl group or an aryl group. Examples thereof include methyl group, ethyl group, n-propyl group, isopropyl group, isobutyl group, pentyl group, hexyl group, octyl group, cyclopentyl group, cyclohexyl group, phenyl group and tolyl group.

Examples of the organoaluminum compounds include:

trialkylaluminums, such as trimethylaluminum, triethylaluminum, triisopropylaluminum; triisobutylaluminum, trioctylaluminum and tri-2-ethylhexylaluminum;
alkenylaluminums, such as isoprenylaluminums,
dialkylaluminum halides, such as dimethylaluminum chloride, diethylaluminum chloride, diisopropylaluminum chloride, diisobutylaluminum chloride, and dimethylaluminum bromide;
alkylaluminum sesquihalides, such as methylaluminum sesqui chloride, ethylaluminum sesquichloride, isopropylaluminum sesquichloride, butylaluminum sesquichloride and ethylaluminum sesquibromide;
alkylaluminum dihalides, such as methylaluminum dichloride, ethylaluminum dichloride, isopropylaluminum dichloride, and ethylaluminum dibromide; and
dialkylaluminum hydrides, such as diethylaluminum hydride, and diisobutylaluminum hydride.

Furthermore, as the organoaluminum compounds (e), the compounds represented by the following general formula [V]:

$$R^1_n Al Y_{3-n} \qquad\qquad [V]$$

where

R$^1$ is a hydrocarbon group same as that defined for R$^1$ in the general formula [IV] above,
Y is a group -OR$^2$, a group -OSiR$^3_3$, a group -OAlR$^4_2$, a group -NR$^5_2$, a group -SiR$^6_3$ or a group -N(R$^7$)AlR8$^8_2$,
n is 1 to 2,
R$^2$, R$^3$, R$^4$ and R$^8$ are each a methyl group, an ethyl group, an isopropyl group, an isobutyl group, a cyclohexyl group or a phenyl group,
R$^5$ is a hydrogen atom, a methyl group, an ethyl group, an isopropyl group, a phenyl group or a trimethylsilyl group,
R$^6$ and R$^7$ are each a methyl group, an ethyl group or the like.

Examples of these organoaluminum compounds include:

(1) compounds represented by $R^1_n Al(OR^2)_{3-n}$, such as dimethylaluminum methoxide, diethylaluminum ethoxide and diisobutylaluminum methoxide;

(2) compounds represented by $R^1_n Al(OSiR^3_3)_{3-n}$, such as $(C_2H_5)_2Al(OSi(CH_3)_3)$, $(iso-C_4H_9)_2Al(OSi(CH_3)_3)$ and $(iso-C_4H_9)_2Al(OSi(C_2H_5)_3)$;

(3) compounds represented by $R^1_n Al(OAlR^4_2)_{3-n}$, such as $(C_2H_5)_2Al(OAl(C_2H_5)_2)$, $(iso-C_4H_9)_2AlOAl(iso-C_4H_9)_2$,

(4) compounds represented by $R^1_n Al(NR^5_2)_{3-n}$, such as $(CH_3)_2AlN(C_2H_5)_2$, $(C_2H_5)_2AlNH(CH_3)$, $(CH_3)_2AlNH(C_2H_5)$, $(C_2H_5)_2AlN(Si(CH_3)_3)_2$ and $(iso-C_4H_9)_2AlN(Si(CH_3)_3)_2$,

(5) compounds represented by $R^1_n Al(SiR^6_2)_{3-n}$, such as $(iso-C_4H_9)_2AlSi(CH_3)_3$ ; and

(6) compounds represented by $R^1_nAl(N(R^7)AlR^8_2)_{3-n}$, such as $(C_2H_5)_2AlN(CH_3)Al(C_2H_5)_2$ and $(iso-C_4H_9)_2AlN(C_2H_5)Al(iso-C_4H_9)_2$.

Of the organoaluminum compounds represented by the general formulae [IV] and [V], preferred are compounds represented by the general formulae: $R^1_3Al$, $R^1_nAl(OR^2)_{3-n}$, and $R^1_nAl(OAlR^4_2)_{3-n}$, and particularly preferred are those wherein R is an isoalkyl group and n is 2.

Preparation of catalyst

In the preparation of the above-mentioned ethylene/α-olefin copolymer (A1), a catalyst which is prepared by contacting the component (a)', the component (b) or (c), and the carrier (d), and optionally the organoaluminum compound (e), all described above, together. Although the choice of the order of contacting the components maybe optional, it is preferable that the carrier (d) and the component (b) or (c), and then the component (a)', and optionally the component (e) are mixed to contact one another.

The contacting of each of the above-mentioned components may be carried out in an inert hydrocarbon solvent. Examples of the inert hydrocarbon solvents for use in the preparation of the catalysts include aliphatic hydrocarbons, such as propane, butane, pentane, hexane, heptane, octane, decane, dodecane and kerosene; alicyclic hydrocarbons, such as cyclopentane, cyclohexane and methylcyclopentane; aromatic hydrocarbons, such as benzene, toluene and xylene; halogenated hydrocarbons, such as ethylene chloride, chlorobenzene and dichloromethane; and mixtures thereof.

In mixing and contacting the component (a)', the component (b) or (c), and the carrier (d), and optionally the component (e), the component (a)' is generally used in an amount of $5 \times 10^{-6}$ to $5 \times 10^{-4}$ mol, preferably $1 \times 10^{-5}$ to $2 \times 10^{-4}$ mol, per 1 g of the carrier (d), and the concentration of the component (a)' is in the range of about $10^{-4}$ to $2 \times 10^{-2}$ mol/l, preferably $2 \times 10^{-4}$ to $10^{-2}$ mol/l. The atomic ratio of the aluminum atom in the component (a)' to the transition metal atom (Al/transition metal) is generally 10 to 500, preferably 20 to 200. The atomic ratio of the aluminum atom (Al-d) in the component (e), which may optionally be used, to the aluminum atom (Al-b) in the component (b) (Al-d/Al-b) is generally in the range of 0.02 to 3, preferably 0.05 to 1.5. In mixing and contacting the component (a)', the component (b) or (c), and the carrier (d), and optionally the component (e), the mixing temperature is generally -50 to 150 °C, preferably -20 to 120 °C, and the time for contacting is 1 minute to 50 hours, preferably 10 minutes to 25 hours.

In the olefin polymerization catalyst obtained as described above, it is desirable that the transition metal atom derived from the component (a)' be supported in an amount of $5 \times 10^{-6}$ to $5 \times 10^{-4}$ gram atom, preferably $10^{-5}$ to $2 \times 10^{-4}$ gram atom, per 1 g of the carrier (d); and the aluminum atom derived from the component (b) and (e) be supported in an amount of $10^{-3}$ to $5 \times 10^{-2}$ gram atom, preferably $2 \times 10^{-3}$ to $2 \times 10^{-2}$ gram atom, per 1 g of the carrier (d).

The catalysts for use in the above-mentioned ethylene/α-olefin copolymer (A1) may also be a prepolymerized catalyst which is obtained by prepolymerizing an olefin in the presence of the component (a)', the component (b) or (c), and the carrier (d), and optionally the component (e), all described above. The prepolymerization can be carried out by introducing an olefin into an inert hydrocarbon solvent in the presence of the component (a)', the component (b) or (c), and the carrier (d), and optionally the component (e).

Examples of olefins for use in the prepolymerization include ethylene and α-olefins of 3 to 20 carbon atoms, such as propylene, 1-butene, 1-pentene, 4-methyl-1-pentene, 1-hexene, 1-octene, 1-decene, 1-dodecene and 1-tetradecene. Of these, particularly preferred are ethylene and a combination of ethylene and an α-olefin which is to be used in the polymerization.

In the prepolymerization, the component (a)' is used in a concentration of $10^{-6}$ to $2 \times 10^{-2}$ mol/l, preferably $5 \times 10^{-5}$ to $10^{-2}$ mol/l; and in an amount of $5 \times 10^{-6}$ to $5 \times 10^{-4}$ mol, preferably $10^{-5}$ to $2 \times 10^{-4}$ mol, per 1 g of the carrier (d). The atomic ratio of the aluminum atom in the component (b) to the transition metal atom in the component (a)' (Al/transition metal) is generally 10 to 500, preferably 20 to 200. The atomic ratio of the aluminum atom (Al-d) in the component (e), which may optionally be used, to the aluminum atom (Al-b) in the component (b) (Al-d/Al-b) is generally in the range of 0.02 to 3, preferably 0.05 to 1.5. The prepolymerization temperature is -20 to 80 °C, preferably 0 to 60 °C, and the prepolymerization time is 0.5 to 100 hours, preferably 1 to 50 hours.

The prepolymerized catalysts can be prepared, for example, in the following manner. That is, a carrier (d) is suspended in an inert hydrocarbon, then an organoaluminum-oxy compound (component (b)) is added to the suspension, and the reaction is carried out for a given period of time. Thereafter, the supernatant is removed to obtain a solid, which is resuspended in an inert hydrocarbon. To the resulting system, a transition metal compound (component (a)') is added, and after the reaction is carried out for a given period of time, the supernatant is removed to obtain a solid catalyst component. Subsequently, the resulting solid catalyst component is added to an inert hydrocarbon containing an organoaluminum compound (component (e)), and an olefin is introduced into the mixture, to obtain a prepolymerized catalyst.

It is desirable that an olefin copolymer produced in the prepolymerization be in an amount of 0.1 to 500 g, preferably 0.2 to 300 g, more preferably 0.5 to 200 g, per 1 g of the carrier (d). In the prepolymerized catalyst, it is desirable that the transition metal atom derived from the component (a)' be supported in an amount of $5 \times 10^{-6}$ to $5 \times 10^{-4}$ gram atom, preferably $10^{-5}$ to $2 \times 10^{-4}$ gram atom, per 1 g of the carrier (d); and the aluminum atom (Al) derived from the component (b) and (e) and the transition metal atom (M) derived from the component (a)' be supported in a molar ratio (Al/M) in the range of 5 to 200, preferably 10 to 150.

The prepolymerization can be carried out batchwise or continuously under reduced pressure, at atmospheric pressure or under pressure. In the prepolymerization, it is desirable that hydrogen be co-used so as to produce a prepolymer having an intrinsic viscosity [η] in the range of 0.2 to 7 dl/g, preferably 0.5 to 5 dl/g.

The ethylene/α-olefin copolymers (A1) for use in the present invention are obtained by copolymerizing ethylene and an α-olefin of 6 to 20 carbon atoms in the presence of the above-described olefin polymerization catalyst or prepolymerized catalyst.

In the present invention, copolymerization of ethylene and an α-olefin is carried out in gas phase or liquid phase, such as slurry polymerization. In the slurry polymerization, an inert hydrocarbon may be used as a solvent and the olefin, per se, may also be a solvent.

Examples of the inert hydrocarbon solvents for use in the slurry polymerization include aliphatic hydrocarbons, such as butane, isobutane, pentane, hexane, octane, decane, dodecane, hexadecane and octadecane; alicyclic hydrocarbons, such as cyclopentane, methylcyclopentane, cyclohexane and cyclooctane; aromatic hydrocarbons, such as benzene, toluene and xylene; and petroleum fractions, such as gasoline, kerosene and gas oil. Of these inert hydrocarbon solvents, preferred are aliphatic hydrocarbons, alicyclic hydrocarbons and petroleum fractions.

When the present invention is carried out in slurry polymerization or gas phase polymerization, it is desirable that the above-mentioned olefin polymerization catalyst be used, as a concentration of the transition metal atom, in an amount of usually $10^{-8}$ to $10^{-3}$ gram atom/liter, preferably $10^{-7}$ to $10^{-4}$ gram atom/liter.

Further, in the main polymerization, an aluminum-oxy compound such as the component (b), and/or an organic aluminum-oxy compound (e) may be added. In this case, an atomic ratio (Al/M) of an aluminum atom (Al) derived from the organic aluminum-oxy compound and the aluminum compound to an transition metal atom (M) derived from the transition metal compound (a)' is in the range of 5 to 300, preferably 10 to 200, more preferably 15 to 150.

In conducting slurry polymerization, the polymerization temperature is generally in the range of -50 to 10 °C, preferably 0 to 90 °C. In conducting gas phase polymerization, the polymerization temperature is generally in the range of 0 to 120 °C, preferably in the range of 20 to 100 °C.

The polymerization pressure is generally atmospheric pressure to 100 kg/cm$^2$, preferably 2 to 50 kg/cm$^2$. The polymerization can be conducted either batchwise, semi-continuously or continuously, in single-step or multi-steps such as two steps.

Further, the polymerization can also be conducted using single or multiple polymerization reactors where the copolymerization is carried out under different conditions at least two separate steps.

Carbon black (B)

The ethylene/α-olefin copolymer (A) is used as raw material for water shield sheets, and a carbon black (B) may be blended to the ethylene/α-olefin copolymer (A) in an amount of 0.3 to 5.0 parts by weight, preferably 0.5 to 3.0 parts by weight, based on 100 parts by weight of the ethylene/α-olefin copolymer (A).

As the carbon blacks (B), conventionally known carbon blacks may be utilized without any limitation. In the present invention, preferably used are, for example, furnace carbon blacks, channel carbon black, thermal carbon blacks and lump carbon blacks.

Other components

Further, it is also possible to blend, in addition to the carbon blacks, known additives may be blended with the ethylene/α-olefin copolymer (A), for example, heat stabilizers, weathering stabilizers, pigments, fillers other than carbon blacks, lubricating agents, antistatic agents, flame retardants, foaming agents, ant-slip agents, anti-blocking agents, anti-fogging agents, dyestuffs, nucleating agents, plasticizing agents, anti-aging agents, hydrochloric acid absorbers and anti-oxidation agents, within limits not prejudicial of the object of the present invention. It is also possible to blend a small amount of other polymeric compounds unless they do not impair the purpose of the present invention.

Water shield sheet

The water shield sheets according to the present invention can be obtained by molding the ethylene/$\alpha$-olefin copolymer (A), which may contain, for example, the carbon black (B), using a sheet molding machine to form a sheet.

It is preferred that the water shield sheets according to the present invention have the following properties:

(1) elongation at tear in a thickness of 1.5 mm (JIS A 6008, crape method, speed of 200 mm/min) being not less than 80 %, preferably not less than 100 %;
(2) elongation at penetration in a thickness of 1.5 mm being not less than 5 mm; and
(3) peel strength of a fusion portion, when heat sealed using a heat-sealer available in the site under the conditions of a set temperature of 500 °C and a sealing rate of 5 m/min (JIS K6328, speed of 50 mm/min), being not less than 10 kg/20 mm, preferably 20 kg/20 mm.

Because the water shield sheets may experience to push something having irregularity, such as those having a sharp tip, the elongation at tear and the elongation at penetration mentioned above are important factors for maintaining performance of the water shield sheets.

The above-mentioned elongation at penetration is measured by a penetration test described later.

As the heat-sealer available in the site, a hot air sheet fusion machine of model 10E manufactured by Lister Co. is employed.

The water shield sheets according to the present invention can easily be heat sealed by a heat sealer used in the site to high strength, so that they are extremely preferable in view of practical utilization.

The water shield sheets according to the present invention can be used in the form of multi-layered sheets comprising an ethylene/$\alpha$-olefin copolymer (A) as an outer layer or an inner layer, in combination with, for example, other substrates, reinforcing materials and drainage materials.

EFFECT OF THE INVENTION

According to the present invention, by the use of a specific ethylene/$\alpha$-olefin copolymer (A), it is possible to obtain water shield sheets having excellent mechanical properties such as excellent tensile strength and strength and elongation at tear, strength and elongation at penetration, as well as flexibility and fusion properties. Because of their excellent utility and applicability to irregular or bumpy sites, and their easy application in the site with high heat sealing strength, the water shield sheets have excellent applicability to a wide area.

EXAMPLES

Hereinafter, the present invention will be described with reference to as the following examples. However, the present invention will not be limited to those examples.

A tensile test, tear propagation test, stiffness test, peel strength test and penetrating test in Examples and Comparative Examples were carried out in accordance with the following testing methods.

(1) Tensile test

The tensile test of a sheet was carried out in the longitudinal direction and the lateral direction at a rate of 200 mm/min in accordance with JIS A 6008, and tensile strength at break and tensile elongation at break in the longitudinal direction and the lateral direction were measured.

(2) Tear propagation test

The tear propagation test of a sheet was carried out in the longitudinal direction and the lateral direction at a rate of 200 mm/min in accordance with JIS A 6008, and tear strength and elongation at tear propagation in the longitudinal direction and the lateral direction were measured.

(3) Stiffness test

Olsen stiffness was measured in accordance with ASTM D 747 and was taken as an indication of flexibility.

(4) Peeling test

Two sheets were fusion bonded with a hot-air sheet fusion bonding machine Model 10E manufactured by Laister Co., at a preset temperature of 500°C, at a rate of 5m/min and adjusted at 23°C for 48 hr or more. Thereafter, peel strength test was carried out at a rate of 50 mm/min in accordance with JIS K 6328 and the peel strength was measured which was taken as an indication of fusion bonding properties.

(5) Penerating test

A universal tester made by Instron Co. was used. A water shield sheet was fixed on a jig having a diameter of 5 cm and penetration was carried out with a flat point having needle of a diameter of 0.7 mm at a rate of 50 mm/min and then breaking strength was measured. The rate of breaking strength /sheet thickness (kg/mm) and the elongation at break were determined.

Example 1

An ethylene•1-hexene copolymer (1-hexene content: 3.2 mol%) was molded using a sheet molding machine having a diameter of 65 mm∅ and L/D of 28 manufactured by Ikegai machine Co. at a die temperature of 190°C and a roll temperature of 45°C, to obtain a sheet having a thickness of 1.5 mm.
With regard to the sheet, in the longitudinal direction and the lateral direction, the tensile strength at break, tensile elongation at break, tear strength and elongation, penetrating strength and elongation, Olsen stiffness and peeling strength were measured with the above testing methods.
The results are shown in Table 1. In the peeling strength test, when the fusion-bonded part was delaminated, the result was defined by "peeling". When parts other than the fusion-bonded part were broken, the result was defined by "base material broken".

Example 2

Sheet molding was carried out in the same manner as described in Example 1 except for using an ethylene • 1-hexene copolymer (1-hexene content: 3.7 mol%) to obtain a sheet having a thickness of 1.5 mm.
With regard to the obtained sheet, in the longitudinal direction and the lateral direction, tensile strength at break, tensile elongation at break, tear strength and elongation, penetrating strength and elongation, Olsen stiffness and peeling strength were measured with the above testing methods.
The results are shown in Table 1.

Example 3

Sheet molding was carried out in the same manner as described in Example 1 except for using an ethylene • 1-hexene copolymer (1-hexene content: 5.8 mol%) to obtain a sheet having a thickness of 1.5 mm.
With regard to the obtained sheet, in the longitudinal direction and the lateral direction, tensile strength at break, tensile elongation at break, tear strength and elongation, penetrating strength and elongation, Olsen stiffness and peeling strength were measured with the above testing methods.
The results are shown in Table 1.

Example 4

Sheet molding was carried out in the same manner as described in Example 1 except for using a composition comprising 100 parts by weight of an ethylene • 1-hexene copolymer used in Example 2 and 2.0 parts by weight of carbon black [furnace carbon black, average particle diameter: 30μm], to obtain a sheet having a thickness of 1.5 mm.
With regard to the obtained sheet, in the longitudinal direction and the lateral direction, tensile strength at break, tensile elongation at break, tear strength and elongation, penetrating strength and elongation, Olsen stiffness and peeling strength were measured with the above testing methods.
The results are shown in Table 1.

Comparative Example 1

Sheet molding was carried out in the same manner as described in Example 1 except for using an ethylene • 1-butene copolymer (1-butene content: 4.2 mol%) to obtain a sheet having a thickness of 1.5 mm.

With regard to the obtained sheet, in the longitudinal direction and the lateral direction, tensile strength at break, tensile elongation at break, tear strength and elongation, penetrating strength and elongation, Olsen stiffness and peeling strength were measured with the above testing methods.

The results are shown in Table 1.

Comparative Example 2

Sheet molding was carried out in the same manner as described in Example 1 except for using an ethylene • 1-butene copolymer (1-butene content: 1.0 mol%), to obtain a sheet having a thickness of 1.5 mm.

With regard to the obtained sheet, in the longitudinal direction and the lateral direction, tensile strength at break, tensile elongation at break, tear strength and elongation, penetrating strength and elongation, Olsen stiffness and peeling strength were measured with the above testing methods.

The results are shown in Table 1.

Comparative Example 3

Sheet molding was carried out in the same manner as described in Example 1 except for using an ethylene • 1-butene copolymer manufactured by U.C.C.Co. (Trade Mark: Flexomer DFDA9064NT7, 1-butene content: 4.0 mol%), to obtain a sheet having a thickness of 1.5 mm.

With regard to the obtained sheet, in the longitudinal direction and the lateral direction, tensile strength at break, tensile elongation at break, tear strength and elongation, penetrating strength and elongation, Olsen stiffness and peeling strength were measured with the above testing methods.

The results are shown in Table 1.

Table 1-1

| | Ex.1 | Ex.2 |
|---|---|---|
| Composition | | |
| Ethylene • α-olefin copolymer [wt part] | 100 | 100 |
| Kind of α-olefin | 1-hexene | 1-hexene |
| Content of α-olefin [mol%] | 3.3 | 3.8 |
| Catalyst used in preparation | Metallocene | Metallocene |
| Carbon black [wt part] | 0 | 0 |
| Physical properties of Copolymer or Composition | | |
| MFR [g/10 min] | 4.2 | 3.7 |
| Density [Kg/m$^3$] | 920 | 915 |
| Tm [°C] | 120 | 119 |
| W [wt%] | 0.4 | 1.2 |
| FI [1/sec] | 280 | 250 |
| Physical properties of Sheet | | |
| Tensile strength at break [Mpa] | | |
| Longitudinal direction | 36 | 35 |
| Lateral direction | 36 | 36 |
| Tensile elongation at break [%] | | |
| Longitudinal direction | 600 | 610 |
| Lateral direction | 670 | 660 |
| Tear strength [N/cm] | | |
| Longitudinal direction | 1170 | 1130 |
| Lateral direction | 1140 | 1100 |
| Elongation at tearing [%] | | |
| Longitudinal direction | 119 | 124 |
| Lateral direction | 120 | 126 |
| Penetration strength [Kg/mm] | 2.1 | 1.9 |
| Elongation at penetration [mm] | 6.6 | 6.8 |
| Olsen stiffness [Mpa] | 2800 | 2000 |
| Peeling strength [Kg/20 mm] | 29 | 28 |
| | Base material broken | Base material broken |

Table 1-2

| | Ex.3 | Ex.4 |
|---|---|---|
| Composition | | |
| Ethylene • α-olefin copolymer [wt part] | 100 | 100 |
| Kind of α-olefin | 1-hexene | 1-hexene |
| Content of α-olefin [mol%] | 6.2 | 3.8 |
| Catalyst used in preparation | Metallocene | Metallocene |
| Carbon black [wt part] | 0 | 2 |
| Physical properties of Copolymer or Composition | | |
| MFR [g/10 min] | 3.8 | 3.8 |
| Density [Kg/m$^3$] | 906 | 924 |
| Tm [°C] | 93 | 119 |
| W [wt%] | 1.6 | 1.2 |
| FI [1/sec] | 260 | 260 |
| Physical properties of Sheet | | |
| Tensile strength at break [Mpa] | | |
| Longitudinal direction | 34 | 34 |
| Lateral direction | 33 | 35 |
| Tensile elongation at break [%] | | |
| Longitudinal direction | 640 | 620 |
| Lateral direction | 700 | 650 |
| Tear strength [N/cm] | | |
| Longitudinal direction | 1100 | 1120 |
| Lateral direction | 1080 | 1120 |
| Elongation at tearing [%] | | |
| Longitudinal direction | 142 | 123 |
| Lateral direction | 142 | 126 |
| Penetration strength [Kg/mm] | 1.9 | 2.0 |
| Elongation at penetration [mm] | 7.4 | 6.7 |
| Olsen stiffness [Mpa] | 900 | 2000 |
| Peeling strength [Kg/20 mm] | 26 | 28 |
| | Base material broken | Base material broken |

Table 1-3

| | Com. Ex.1 | Com. Ex.2 | Com. Ex.3 |
|---|---|---|---|
| Composition | | | |
| Ethylene • α-olefin copolymer [wt part] | 100 | 100 | 100 |
| Kind of α-olefin | 1-butene | 1-butene | 1-butene |
| Content of α-olefin [mol%] | 4.2 | 1.0 | 4.0 |
| Catalyst used in preparation | Ziegler | Ziegler | Ziegler |
| Carbon black [wt part] | 0 | 0 | 0 |
| Physical properties of Copolymer or Composition | | | |
| MFR [g/10 min] | 0.60 | 0.27 | 0.90 |
| Density [Kg/m$^3$] | 920 | 945 | 916 |
| Tm [°C] | 123 | 129 | 124 |
| W [wt%] | 7.2 | 0.5 | 14 |
| FI [1/sec] | 320 | 410 | 125 |
| Physical properties of Sheet | | | |
| Tensile strength at break [Mpa] | | | |
| Longitudinal direction | 23 | 30 | 32 |
| Lateral direction | 21 | 34 | 31 |
| Tensile elongation at break [%] | | | |
| Longitudinal direction | 750 | 770 | 660 |
| Lateral direction | 700 | 750 | 700 |
| Tear strength [N/cm] | | | |
| Longitudinal direction | 1070 | 1550 | 1050 |
| Lateral direction | 1110 | 1600 | 1110 |
| Elongation at tearing [%] | | | |
| Longitudinal direction | 81 | 50 | 98 |
| Lateral direction | 95 | 51 | 113 |
| Penetration strength [Kg/mm] | 1.7 | 2.1 | 1.7 |
| Elongation at penetration [mm] | 6.6 | 4.2 | 6.6 |
| Olsen stiffness [Mpa] | 2800 | 6000 | 2100 |
| Peeling strength [Kg/20 mm] | 5 | 2 | 2 |
| | Peeling | Peeling | Peeling |

Preparation Example 1

Preparation of Ethylene • α-olefin copolymer (A1-1)

[Preparation of Catalyst]

10 Kg of silica dried at 250°C for 10 hr was suspended in 154 l of toluene and then cooled to 0°C. Thereafter, 57.5 l of a toluene solution of methylaminoxane (Al=1.33 mol/l) was added dropwise for 1 hr to the suspension. During the addition, the system was kept at 0°C. Successively, the reaction was carried out at 0°C for 30 min, and then the temperature was elevated to 95°C over 1.5 hr and the reaction was carried out at the same temperature for 20 hr. Thereafter, the temperature was lowered to 60°C and a supernatant liquid was removed with a decantation method. The solid component thus prepared was washed twice with toluene and thereafter re-suspended with 100 l of toluene. To the system, 16.8 l of a toluene solution of bis(1,3-dimethylcyclopentadienyl)zirconium dichloride (Zr=27.0 mmol/l) was added dropwise at 80°C for 30 min and further the mixture was allowed to react at 80°C for 2 hr. Thereafter a supernatant liquid was removed and the remainder was washed twice with hexane to obtain a solid catalyst containing 3.5 mg of zirconium per 1 g.

[Preparation of Pre-polymerization catalyst]

To 87 l of hexane containing 2.5 mol of triisobutyl aluminum, 870 g of the solid catalyst prepared in the above and 260 g of 1-hexene were added and prepolymerized with ethylene at 35°C for 5 hr, to obtain a prepolymerization catalyst that 10 g of polyethylene was prepolymerized per 1 g of the solid catalyst.

[Polymerization]

Coploymerization of ethylene and 1-hexene was carried out at the total pressure of 20 Kg/cm$^2$-G at a polymerization temperature of 80°C with a continuous fluidized bed gas phase polymerization device. The prepolymerization catalyst prepared in the above in an amount, in terms of zirconium atom, of 0.33 mmol/h and triisobutyl aluminum in an amount of 10 mmol/h were fed continuously. During the polymerization, ethylene, 1-hexene, hydrogen and nitrogen were continuously fed to keep a gas composition constant (gas composition: 1-hexene/ethylene = 0.02, hydrogen/ethylene = $10.5 \times 10^{-4}$, ethylene concentration = 70%).
The resulted polyethylene (A1-1) has a yield of 60 Kg/hr, a density of 925 g/cm$^3$ and a MFR of 0.3 g/10 min. The properties of the polyethylene (A1-1) are shown in Table 2.

Preparation Example 2

Preparation of Ethylene • α-olefin copolymer (A1-2)

The procedure of Preparation Example 1 was repeated except that 4 l of a toluene solution of bis(1,3-n-butylmethylmethylcyclopentadienyl)zirconium dichloride (Zr = 34.0 mmol/l) and 2 l of a toluene solution of bis(1,3-dimethylcyclopentadienyl)zirconium dichloride (Zr = 28.4 mmol/l) were used in place of a toluene solution of bis(1,3-dimethylcyclopentadienyl)zirconium dichloride, and the density and MFR were prepared as shown in Table 2, to obtain an ethylene • α-olefin copolymer (A1-2). The properties of the ethylene • α-olefin copolymer (A1-2) are shown in Table 2.

Preparation Example 3

Preparation of Ethylene • α-olefin copolymer (A1-3)

The procedure of Preparation Example 1 was repeated except that the density and MFR were prepared as shown in Table 2, to obtain an ethylene • α-olefin copolymer (A1-3). The properties of the ethylene • α-olefin copolymer (A1-3) are shown in Table 2.

Preparation Example 4

Preparation of Ethylene • α-olefin copolymer (A1-4)

The procedure of Preparation Example 1 was repeated except that the density and MFR were prepared as shown in Table 2, to obtain an ethylene • α-olefin copolymer (A1-4). The properties of the ethylene • α-olefin copolymer (A1-4) are shown in Table 2.

Preparation Example 5

Preparation of Ethylene • α-olefin copolymer (A1-5)

The procedure of Preparation Example 1 was repeated except that 3.2 l of a toluene solution of bis(1,3-dimethylcyclopentadienyl)zirconium dichloride (Zr = 28.1 mmol/l) and 10.7 l of a toluene solution of bis(1,3-n-butylmethylcyclopentadienyl)zirconium dichloride (Zr = 34.0 mmol/l) were used in place of a toluene solution of bis(1,3-dimethylcyclopentadienyl)zirconium dichloride, to obtain a polymerization catalyst.

[Polymerization]

The procedure of Preparation Example 1 was repeated except that the density and MFR were prepared as shown in Table 2 and the above polymerization catalyst was used, to obtain an ethylene • α-olefin copolymer (A1-5). The properties of the ethylene • α-olefin copolymer (A1-5) are shown in Table 2.

Table 2-1

| Copolymer | Comonomer | | MFR g/10 min | [η] dl/g | Density Kg/m3 | Part soluble in n-decane wt% | *1 |
|---|---|---|---|---|---|---|---|
| | Kind | Content mol% | | | | | |
| A1-1 | 1-hexene | 2.5 | 0.30 | 1.90 | 925 | 0.20 | 0.99 |
| A1-2 | 1-hexene | 2.5 | 0.35 | 2.15 | 926 | 0.19 | 0.90 |
| A1-3 | 1-hexene | 3.2 | 0.13 | 2.15 | 915 | 0.19 | 2.52 |
| A1-4 | 1-hexene | 3.9 | 0.24 | 1.96 | 911 | 0.58 | 3.70 |
| A1-5 | 1-hexene | 4.0 | 0.30 | 2.28 | 910 | 0.55 | 4.08 |
| [η]: Intrinsic viscosity as measured in decalin at 135°C | | | | | | | |

*1: Value of $80 \times \exp(-100(d/1000-0.88)) + 0.1$

Table 2-2

| Copolymer | Tm °C | MT g | *2 | *3 | FI s$^{-1}$ | *4 |
|---|---|---|---|---|---|---|
| A1-1 | 117.0 | 7.0 | 6.0 | 12.0 | 85 | 23 |
| A1-2 | 117.3 | 7.1 | 5.3 | 10.9 | 44 | 26 |
| A1-3 | 113.8 | 13.3 | 12.2 | 20.7 | 40 | 10 |
| A1-4 | 112.4 | 8.0 | 7.3 | 13.9 | 67 | 18 |
| A1-5 | 112.2 | 13.8 | 6.0 | 12.0 | 30 | 23 |

*2: Value of $2.2 \times MFR^{-0.84}$
*3: Value of $5.5 \times MFR^{-0.65}$
*4: Value of $75 \times MFR$

Examples 5 to 9

In each examples, sheet molding was carried out in the same manner as described in Example 1 except that the ethylene • 1-hexene copolymers each prepared in Preparation Examples 1 to 5 were used in place of the ethylene • 1-hexene (1-hexene content: 3.2 mol%), to obtain a sheet having a thickness of 1.5 mm.
With regard to each of the obtained sheet, in the longitudinal direction and the lateral direction, tensile strength at break, tensile elongation at break, tear strength and elongation, penetrating strength and elongation, Olsen stiffness and peeling strength were measured with the above testing methods.
The results are shown in Table 3.

Table 3-1

|  | Ex.5 | Ex.6 | Ex.7 |
|---|---|---|---|
| Composition |  |  |  |
| Ethylene • $\alpha$-olefin copolymer [wt part] | 100 | 100 | 100 |
| Kind of $\alpha$-olefin | 1-hexene | 1-hexene | 1-hexene |
| Content of $\alpha$-olefin [mol%] | 2.5 | 2.5 | 3.2 |
| Catalyst used in preparation | Metallocene | Metallocene | Metallocene |
| Carbon black [wt part] | 0 | 0 | 0 |
| Physical properties of Copolymer or Composition |  |  |  |
| MFR [g/10 min] | 0.30 | 0.35 | 0.13 |
| Density [Kg/m$^3$] | 925 | 926 | 915 |
| Tm [°C] | 117.0 | 117.3 | 113.8 |
| W [wt%] | 0.20 | 0.19 | 0.19 |
| FI [1/sec] | 85 | 44 | 40 |
| Physical properties of Sheet Tensile strength at break [Mpa] |  |  |  |
| Longitudinal direction | 36 | 37 | 39 |
| Lateral direction | 35 | 37 | 39 |
| Tensile elongation at break [%] |  |  |  |
| Longitudinal direction | 700 | 690 | 720 |
| Lateral direction | 680 | 690 | 700 |
| Tear strength [N/cm] |  |  |  |
| Longitudinal direction | 1190 | 1200 | 1230 |
| Lateral direction | 1170 | 1220 | 1230 |
| Elongation at tearing [%] |  |  |  |
| Longitudinal direction | 90 | 88 | 92 |
| Lateral direction | 88 | 86 | 88 |
| Penetration strength [Kg/mm] | 2.1 | 2.0 | 2.2 |
| Elongation at penetration [mm] | 6.8 | 6.7 | 6.9 |
| Olsen stiffness [Mpa] | 3000 | 3000 | 2000 |
| Peeling strength [Kg/20 mm] | 28 | 27 | 27 |
|  | Base material broken | Base material broken | Base material broken |

Table 3-2

| | Ex.8 | Ex.9 |
|---|---|---|
| Composition | | |
| Ethylene • α-olefin copolymer [wt part] | 100 | 100 |
| Kind of α-olefin | 1-hexene | 1-hexene |
| Content of α-olefin [mol%] | 3.9 | 4.0 |
| Catalyst used in preparation | Metallocene | Metallocene |
| Carbon black [wt part] | 1 | 4 |
| Physical properties of Copolymer or Composition | | |
| MFR [g/10 min] | 0.24 | 0.30 |
| Density [Kg/m$^3$] | 911 | 910 |
| Tm [°C] | 112.4 | 112.2 |
| W [wt%] | 0.58 | 0.55 |
| FI [1/sec] | 67 | 30 |
| Physical properties of Sheet Tensile strength at break [Mpa] | | |
| Longitudinal direction | 37 | 35 |
| Lateral direction | 35 | 34 |
| Tensile elongation at break [%] | | |
| Longitudinal direction | 700 | 690 |
| Lateral direction | 690 | 700 |
| Tear strength [N/cm] | | |
| Longitudinal direction | 1150 | 1100 |
| Lateral direction | 1150 | 1110 |
| Elongation at tearing [%] | | |
| Longitudinal direction | 93 | 90 |
| Lateral direction | 88 | 85 |
| Penetration strength [Kg/mm] | 2.3 | 2.3 |
| Elongation at penetration [mm] | 6.8 | 6.6 |
| Olsen stiffness [Mpa] | 1500 | 800 |
| Peeling strength [Kg/20 mm] | 28 | 23 |
| | Base material broken | Base material broken |

**Claims**

1. A water shield sheet comprising an ethylene/α-olefin copolymer (A), wherein said ethylene/α-olefin copolymer (A) has the following properties:

   (i) a copolymer of ethylene and an α-olefin of 3 to 20 carbon atoms;
   (ii) a melt flow rate (MFR: ASTM D 1238, 190 °C, load of 2.16 kg) being in the range of 0.05 to 10 g/10 min;
   (iii) a density (d) being in the range of 880 to 935 kg/m$^3$;

(iv) a temperature (melting point: Tm ($^{\circ}$C)) at the maximum peak position in an endothermic curve, as measured in a differential Scanning calorimeter (DSC), and the density (d (kg/m$^3$)) satisfying the following relation:

$$Tm < 0.4 \times d - 244; \text{ and}$$

(v) a quantity fraction (W) of n-decane-soluble component at room temperature being not higher than 3.0 % by weight.

2. The water shield sheet as claimed in claim 1, wherein said ethylene/$\alpha$-olefin copolymer (A) is an ethylene/$\alpha$-olefin copolymer prepared using a metallocene catalyst.

3. The water shield sheet as claimed in claim 1 or 2, wherein said ethylene/$\alpha$-olefin copolymer (A) contains a carbon black (B) in an amount of 0.3 to 5.0 parts by weight based on 100 parts by weight of the ethylene/$\alpha$-olefin copolymer (A).

4. The water shield sheet as claimed in any one of claims 1 to 3, wherein said sheet has a thickness of 0.4 to 4.0 mm.

5. The water shield sheet as claimed in any one of claims 1 to 4, wherein said sheet has the following properties:

(1) elongation at tear in a thickness of 1.5 mm being not less than 80 %;
(2) penetration strength in a thickness of 1.5 mm being not less than 5 mm; and
(3) peel strength of a fusion portion, when heat sealed using a heat-sealer available in the site under the conditions of a set temperature of 500 $^{\circ}$C and a sealing rate of 5 m/min, being not less than 10 kg/20 mm.

# INTERNATIONAL SEARCH REPORT

| International application No. |
| --- |
| PCT/JP99/00413 |

**A. CLASSIFICATION OF SUBJECT MATTER**
Int.Cl⁶ C08J5/18, C08L23/08

According to International Patent Classification (IPC) or to both national classification and IPC

**B. FIELDS SEARCHED**

Minimum documentation searched (classification system followed by classification symbols)
Int.Cl⁶ C08J5/18, C08L23/08

Documentation searched other than minimum documentation to the extent that such documents are included in the fields searched
Jitsuyo Shinan Koho         1926-1996   Toroku Jitsuyo Shinan Koho    1994-1999
Kokai Jitsuyo Shinan Koho   1971-1999   Jitsuyo Shinan Keisai Koho    1996-1999

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| EX | JP, 11-49905, A (Mitsui Chemicals, Inc.), 23 February, 1999 (23. 02. 99), Claims (Family: none) | 1-5 |
| Y | JP, 10-182854, A (Mitsui Chemicals, Inc.), 7 July, 1998 (07. 07. 98), Claims ; Table 1 (Family: none) | 1-5 |
| Y | JP, 9-216974, A (Mitsubishi Chemical MKV Co.), 19 August, 1997 (19. 08. 97), Claims ; column 3, lines 36 to 38 ; column 4, lines 5 to 8 (Family: none) | 1-5 |
| A | JP, 8-253632, A (Nippon Petrochemicals Co., Ltd.), 1 October, 1996 (01. 10. 96), Claims (Family: none) | 1-5 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
| --- | --- |
| 26 April, 1999 (26. 04. 99) | 11 May, 1999 (11. 05. 99) |

| Name and mailing address of the ISA/ Japanese Patent Office | Authorized officer |
| --- | --- |
| Facsimile No. | Telephone No. |

Form PCT/ISA/210 (second sheet) (July 1992)